# EUROPEAN PATENT APPLICATION

(11) **EP 3 495 700 A1**
(43) Date of publication of application: **12.06.2019**
(21) Application number: 18751428.6
(22) Date of filing: 31.01.2018
(51) Int. Cl.: F16J 15/16, B62D 55/125, F16C 33/78, F16C 33/80, F16J 15/18, F16J 15/24, F16J 15/447, B62D 55/15

(54) **TRAVELING DEVICE FOR CONSTRUCTION MACHINE**

(30) Priority: 09.02.2017 JP 2017022128
(71) Applicant: Hitachi Construction Machinery Co., Ltd., Taito-ku Tokyo 110-0015 (JP)
(72) Inventor: IWANAMI Tomohiko, Tsuchiura-shi Ibaraki 300-0013 (JP); MASUDA Hayato, Tsuchiura-shi Ibaraki 300-0013 (JP)
(74) Representative: Manitz Finsterwald Patent- und Rechtsanwaltspartnerschaft mbB
(86) International application number: PCT/JP2018/003159
(87) International publication number: WO 2018/147138

(57) **Abstract**

A labyrinth (32) is provided in a gap (22) formed between a fixed-side end surface (13E) of a fixed-side housing and a rotation-side end surface (15C) of a rotation-side housing (15). The labyrinth (32) is constituted by a fixed-side recessed part (13F), a fixed-side fitting projecting part (13G), a rotation-side fitting projecting part (15D), and a rotation-side recessed part (15E). First and second fabric-like members (33), (34) formed annularly by a fabric-like material are provided in the fixed-side recessed part (13F) and the rotation-side recessed part (15E), respectively. A grease accommodating space (35) in which grease (G) is filled is provided between the first fabric-like member (33) and the second fabric-like member (34).

## Description

### TECHNICAL FIELD

The present invention relates to a traveling device used for a construction machine such as a hydraulic excavator, a hydraulic crane, a wheel loader, a dump truck and the like.

### BACKGROUND ART

A lower traveling structure of a crawler-type construction machine such as a hydraulic excavator is generally configured by a truck frame having left and right side frames, a traveling device provided on one end side of each of the side frames, an idler wheel provided on the other end side of each of the side frames, and a crawler belt wound between a driving wheel (sprocket) and the idler wheel provided on the traveling device.

The traveling device for the hydraulic excavator is usually constituted by a hydraulic motor which is a rotation source and a reduction device which reduces a speed of the rotation of the hydraulic motor and outputs it. The reduction device includes a fixed-side housing accommodating the rotation source and a rotation-side housing provided rotatably with respect to the fixed-side housing and driven by the rotation source. The reduction mechanism for reducing a speed of rotation of the rotation source is accommodated in the rotation-side housing. A gap between the fixed-side housing and the rotation-side housing is sealed by a floating seal.

Here, a floating seal is constituted by a pair of seal rings each having a sliding contact surface disposed on an inner peripheral side of each of the housings and brought into sliding contact with each other and a pair of O-rings provided between each of the seal rings and each of the housings, respectively.

In this case, each of the seal rings can seal lubricant oil in a reduction mechanism by causing the sliding contact surfaces to be brought into sliding contact with each other by elastic forces of the O-rings and lubricate the reduction mechanism by this lubricant oil.

Since the hydraulic excavator travels on an uneven ground such as a muddy ground, foreign substances such as earth and sand enters a gap between the fixed-side housing and the rotation-side housing. The earth and sand having entered the gap are not discharged to an outside but are accumulated around the floating seal.

A pressure of the earth and sand accumulated around the floating seal acts on the O-ring of the floating seal. As a result, the O-ring is shifted from a predetermined position, a surface pressure of the sliding contact surface of each of the seal rings becomes uneven, and oil leakage occurs . As a result, the lubricant oil sealed in the rotation-side housing by the floating seal leaks to the outside and cannot properly lubricate the reduction mechanism and the like for a long time any more, and it is likely that reliability of the entire reduction device lowers.

On the other hand, a structure in which a seal unit constituted by a low-friction resin material or the like, and an elastic body such as an O-ring and an X-ring is provided in order to reduce entry of the foreign substance such as earth and sand is known. This seal structure has a seal accommodating groove provided on an axial end surface of the rotation-side housing faced with an axial end surface of the fixed-side housing. In this seal accommodating groove, a low-friction resin material is provided, and by pressing this low-friction resin material to the axial end surface of the fixed-side housing by the elastic body such as an O-ring, a space between the fixed-side housing and the rotation-side housing can be sealed (see Patent Documents 1 and 2, for example).

### PRIOR ART DOCUMENT

### PATENT DOCUMENT

Patent Document 1: Japanese Patent Laid-Open No. 2013-210071 A
Patent Document 2: Japanese Patent Laid-Open No. 2013-210068 A

### SUMMARY OF THE INVENTION

However, in the seal structure by the aforementioned conventional art, when the elastic body such as an O-ring and an X-ring deteriorates, the pressing force from the elastic body to the low-friction resin material lowers. Thus, there is a concern that sealing performances between the axial end surface of the fixed-side housing and the low-friction resin material lowers.

The present invention is made in view of the aforementioned problems of the conventional art and an object of the present invention is to provide a traveling device for a construction machine in which entry of foreign substances such as earth and sand into a floating seal through a gap formed between a fixed-side housing and a rotation-side housing so that the sealing performances of the floating seal can be held properly for a long time.

In order to solve the aforementioned problem, the present invention is applied to a traveling device for a construction machine including a cylindrical fixed-side housing fixed to a vehicle body of the construction machine and in which a rotation source is accommodated, a cylindrical rotation-side housing provided coaxially with respect to the fixed-side housing and rotatably through a bearing and driven by the rotation source for causing the vehicle body to travel, a floating seal provided between the fixed-side housing and the rotation-side housing in order to seal a gap formed between the axial end surface of the fixed-side housing and the axial end surface of the rotation-side housing, and a labyrinth provided in the gap by being located closer to an outer side in a radial direction than the floating seal.

A feature of the constitution employed by the present invention is that the labyrinth is constituted by a first recessed part formed by denting one axial end surface in the axial end surfaces of the fixed-side housing and the rotation-side housing in the axial direction, a first fitting projecting part provided by causing the other axial end surface in the axial end surfaces of the fixed-side housing and the rotation-side housing to protrude in the axial direction and to fit with the first recessed part, a second recessed part formed by denting the other axial end surface in the axial end surfaces of the fixed-side housing and the rotation-side housing in the axial direction to be located closer to the outer side in the radial direction than the first recessed part, and a second fitting projecting part provided by causing the one axial end surface in the axial end surfaces of the fixed-side housing and the rotation-side housing to protrude in the axial direction to be located closer to the outer side in the radial direction than the first recessed part and to fit with the second recessed part, a first fabric-like member formed annularly by a fabric-like material is provided in the first recessed part, a second fabric-like member formed annularly by the fabric-like material is provided in the second recessed part, a grease accommodating space is formed between the first fabric-like member and the second fabric-like member, and grease is filled in the grease accommodating space.

According to the present invention, entry of the foreign substance such as earth and sand into the floating seal through the gap formed between the fixed-side housing and the rotation-side housing can be suppressed, and the sealing performances of the floating seal can be held properly for a long time.

### BRIEF DESCRIPTION OF THE DRAWINGS

Fig. 1 is a front view showing a hydraulic excavator including a traveling device according to a first embodiment of the present invention.
Fig. 2 is a sectional view of a hydraulic motor, a reduction device, a driving wheel, a crawler belt and the like of a lower traveling structure seen from an arrow II-II direction in Fig. 1.
Fig. 3 is an enlarged sectional view of an essential part showing a state where a rotation-side housing, a floating seal and the like are removed from a fixed-side housing according to the first embodiment in an enlarged manner.
Fig. 4 is an enlarged sectional view of an essential part showing a state where the fixed-side housing and the rotation-side housing, the floating seal and the like are mounted.
Fig. 5 is a partially cutaway perspective view showing a first fabric-like member as a single body.
Fig. 6 is an enlarged sectional view of an essential part similar to Fig. 4 showing the fixed-side housing, the rotation-side housing, the floating seal and the like according to a second embodiment.
Fig. 7 is an enlarged sectional view of an essential part similar to Fig. 4 showing the fixed-side housing, the rotation-side housing, the floating seal and the like according to a third embodiment.
Fig. 8 is an enlarged sectional view of an essential part similar to Fig. 4 showing the fixed-side housing, the rotation-side housing, the floating seal and the like according to a fourth embodiment.
Fig. 9 is an enlarged sectional view of an essential part similar to Fig. 4 showing the fixed-side housing, the rotation-side housing, the floating seal and the like according to a fifth embodiment.

### MODE FOR CARRYING OUT THE INVENTION

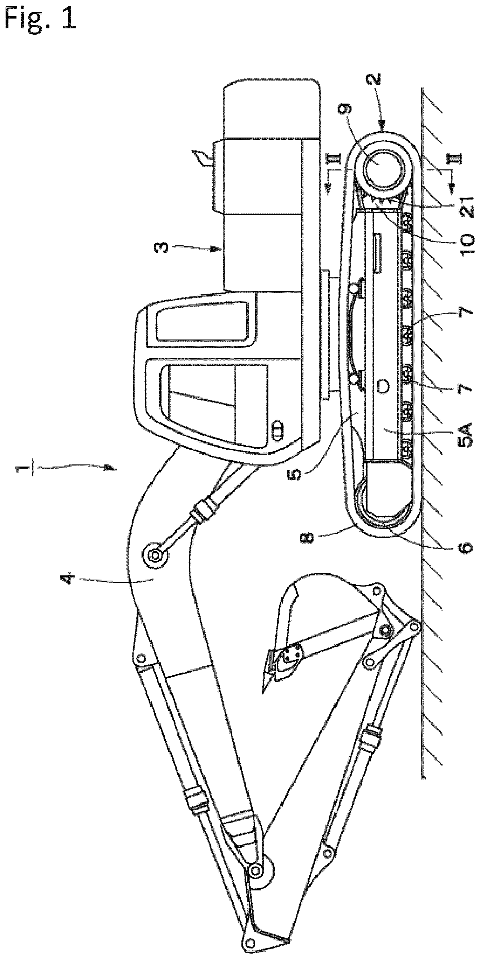

Hereinafter, the embodiments of a traveling device for a construction machine according to the present invention will be explained in detail referring to the accompanying drawings. Figs. 1 to 5 illustrate a first embodiment of the present invention and exemplify the traveling device for a hydraulic excavator as the traveling device for the construction machine.

In the Figs., a hydraulic excavator 1 is a typical example of the construction machine, and a vehicle body of this hydraulic excavator 1 is constituted by a self-propelled crawler-type lower traveling structure 2 and an upper revolving structure 3 rotatably mounted on the lower traveling structure 2. A working mechanism 4 is provided capable of upward/downward movement on a front part side of the upper revolving structure 3, and the hydraulic excavator 1 performs an excavating work of earth and sand by using the working mechanism 4.

The lower traveling structure 2 includes a truck frame 5 including left and right side frames 5A (only left side is shown) extending in a front-and-rear direction, a traveling device 9 which will be described later and is provided on one end side in a longitudinal direction of each of the side frames 5A, and an idler wheel 6 provided on the other end side in the longitudinal direction of each of the side frames 5A. A plurality of lower guide rollers 7 is provided on a lower side of each of the side frames 5A. A crawler belt 8 is wound around the idler wheel 6, each of the lower guide rollers 7, and a driving wheel 21 which will be described later.

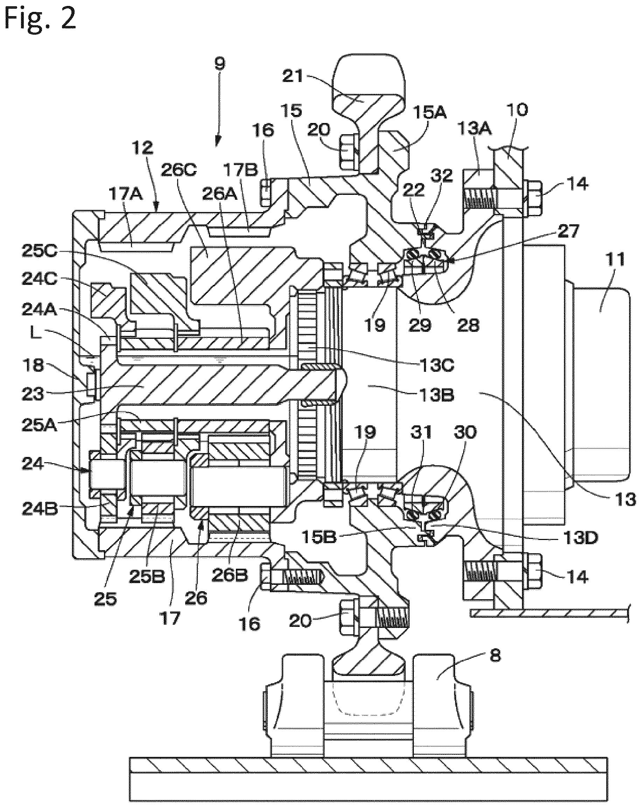

As shown in Fig. 2, the traveling device 9 is constituted by including a traveling device bracket 10 fixed to one end side in the longitudinal direction of each of the side frames 5A, a hydraulic motor 11 as a rotation source mounted on the traveling device bracket 10, and a reduction device 12 which will be described later for reducing a speed of rotation of the hydraulic motor 11. The traveling device 9 rotates the driving wheel 21 which will be described later with a large torque by reducing the speed of the rotation of the hydraulic motor 11 by the reduction device 12 and causes crawler belt 8 wound around the driving wheel 21 and the idler wheel 6 to go round and to be driven.

The reduction device 12 is for reducing the speed of the rotation of the hydraulic motor 11. This reduction device 12 is constituted by including a fixed-side housing 13 which will be described later, a rotation-side housing 15, a gap 22, a planetary gear reduction mechanisms 24, 25, and 26, a floating seal 27, a labyrinth 32, first and second fabric-like members 33 and 34, a grease accommodating space 35, a grease passage 36 and the like.

The fixed-side housing 13 is provided by being fixed to the traveling device bracket 10 of the lower traveling structure 2. This fixed-side housing 13 is formed cylindrically and accommodates the hydraulic motor 11 therein. The fixed-side housing 13 has a flange part 13A having a large diameter, and this flange part 13A is fixed to the traveling device bracket 10 by using a plurality of bolts 14.

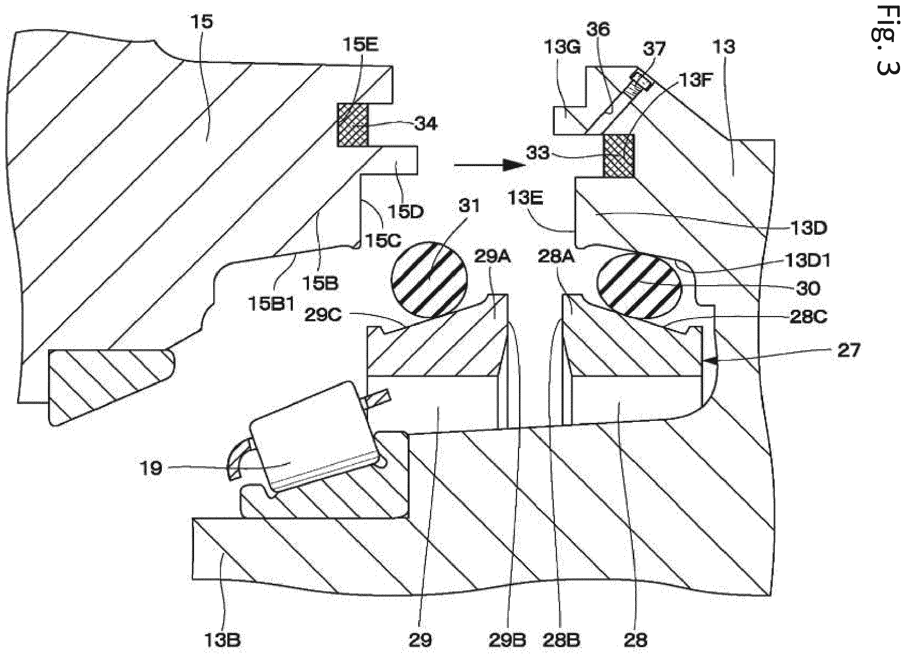

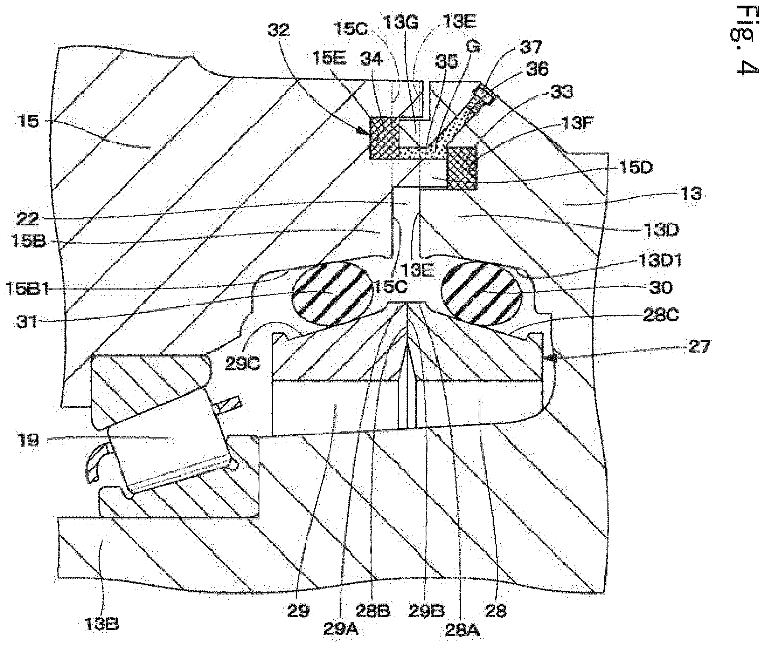

As shown in Fig. 2, a housing support part 13B supporting the rotation-side housing 15 which will be described later and a male spline part 13C with which a carrier 26C of the planetary gear reduction mechanism 26 which will be described later is coupled are provided on a distal end side of the fixed-side housing 13 protruding from the traveling device bracket 10. Moreover, a cylindrical seal attaching part 13D on which a fixed-side seal ring 28 which will be described later is mounted is provided between the flange part 13A and the housing support part 13B. As shown in Figs. 3 and 4, a distal end part of the seal attaching part 13D is an annular fixed-side end surface 13E located closer to an outer side in a radial direction than the floating seal 27.

The fixed-side end surface 13E constitutes the axial end surface of the fixed-side housing 13 and forms a gap 22 which will be described later with a rotation-side end surface 15C of the rotation-side housing 15. As indicated by a solid line and a two-dot chain line in Fig. 4, this fixed-side end surface 13E as the axial end surface is a surface biased to a fixed-side O-ring 30 side with respect to a plane on which a sliding contact surface 28B of the fixed-side seal ring 28 is disposed. An annular fixed-side recessed part 13F and a fixed-side fitting projecting part 13G constituting the labyrinth 32 which will be described later is formed on an outer peripheral side (a portion indicated by the two-dot chain line in Fig. 4) of the fixed-side end surface 13E.

The rotation-side housing 15 is provided coaxially with respect to the fixed-side housing 13 and rotatably through a bearing 19 with respect to the fixed-side housing 13. The rotation-side housing 15 is generally formed by having a cylindrical shape with lid and accommodates the planetary gear reduction mechanisms 24, 25, and 26 therein. This rotation-side housing 15 is driven by the hydraulic motor 11 in order to cause the lower traveling structure 2 to travel. The rotation-side housing 15 is constituted by including an annular flange part 15A disposed on the outer peripheral side of the housing support part 13B provided on the fixed-side housing 13, a cylindrical ring gear 17 fixed to the flange part 15A by using a bolt 16 and having inner teeth 17A and 17B formed on an inner peripheral side, and a lid member 18 having a disk shape for covering the ring gear 17.

The inner peripheral side of the flange part 15A is mounted on the housing support part 13B of the fixed-side housing 13 rotatably through the bearing 19. The driving wheel (sprocket) 21 is fixed to the outer peripheral side of the flange part 15A by using a plurality of bolts 20. Moreover, the cylinder seal attaching part 15B on which a rotation-side seal ring 29 which will be described later is mounted is provided on the inner peripheral side of the flange part 15A. The distal end part of the seal attaching part 15B is the annular rotation-side end surface 15C located closer to the outer side in the radial direction than the floating seal 27.

The rotation-side end surface 15C constitutes the axial end surface of the rotation-side housing 15 and forms the gap 22 with the fixed-side end surface 13E of the fixed-side housing 13. As indicated by the solid line and the two-dot chain line in Fig. 4, this rotation-side end surface 15C as the axial end surface is a surface biased to a rotation-side O-ring 31 side with respect to a plane on which a sliding contact surface 29B of the rotation-side seal ring 29 is disposed. An annular rotation-side fitting projecting part 15D and a rotation-side recessed part 15E constituting the labyrinth 32 are formed on the outer peripheral side (a part indicated by the two-dot chain line in Fig. 4) of the rotation-side end surface 15C.

The axial gap 22 is formed annularly over the entire circumference between the fixed-side end surface 13E of the fixed-side housing 13 and the rotation-side end surface 15C of the flange part 15A constituting the rotation-side housing 15. That is, as shown in Fig. 4, the gap 22 is formed between the fixed-side end surface 13E and the rotation-side end surface 15C including the gap between the fixed-side recessed part 13F and the rotation-side fitting projecting part 15D and the gap between the fixed-side fitting projecting part 13G and the rotation-side recessed part 15E. The floating seal 27 is provided on closer to the inner side in the radial direction than this gap 22.

A rotation shaft 23 is provided in the rotation-side housing 15 and leads out a rotation output of the hydraulic motor 11. A base end side of the rotation shaft 23 is coupled with an output shaft of the hydraulic motor 11, and a distal end side of the rotation shaft 23 is extended in the axial direction in the ring gear 17. A sun gear 24A which will be described later is integrally formed on the distal end part of the rotation shaft 23 located in the vicinity of the lid member 18.

The three-stepped planetary gear reduction mechanisms 24, 25, and 26 are provided in the rotation-side housing 15. These three-stepped planetary gear reduction mechanisms 24, 25, and 26 reduce the speed of the rotation of the hydraulic motor 11 in three steps and rotate the driving wheel 21 mounted on the flange part 15A of the rotation-side housing 15 with a large torque.

The first-stage planetary gear reduction mechanism 24 is constituted by including the sun gear 24A integrally formed on the distal end part of the rotation shaft 23, a plurality of planetary gears 24B (only one of them is shown) meshed with the sun gear 24A and the inner teeth 17A of the ring gear 17 and revolving around the sun gear 24A while rotating, and a carrier 24C rotatably supporting each of the planetary gears 24B. The first-stage planetary gear reduction mechanism 24 reduces the speed of the rotation of the sun gear 24A and transmits revolution of each of the planetary gears 24B to a second-stage sun gear 25A on which will be described later through the carrier 24C.

The second-stage planetary gear reduction mechanism 25 is constituted by including the cylindrical sun gear 25A spline-connected to the first-stage carrier 24C in a state loosely fitted with the rotation shaft 23, a plurality of planetary gears 25B (only one of them is shown) meshed with the sun gear 25A and inner teeth 17A of the ring gear 17 and revolving around the sun gear 25A while rotating, and a carrier 25C rotatably supporting each of the planetary gears 25B. The second-stage planetary gear reduction mechanism 25 reduces the speed of the rotation of the sun gear 25A and transmits the revolution of each of the planetary gears 25B to the third-stage sun gear 26A which will be described later through the carrier 25C.

The third-stage planetary gear reduction mechanism 26 is constituted by including the cylindrical sun gear 26A spline-connected to the second-stage carrier 25C in a state loosely fitted with the rotation shaft 23, a plurality of planetary gears 26B (only one of them is shown) meshed with the sun gear 26A and inner teeth 17B of the ring gear 17 and revolving around the sun gear 26A while rotating, and a carrier 26C rotatably supporting each of the planetary gears 26B.

The third-stage carrier 26C is spline-connected with the male spline part 13C of the fixed-side housing 13. Therefore, the revolution of each of the planetary gears 26B supported by the carrier 26C is transmitted to the rotation-side housing 15 through the inner teeth 17B of the ring gear 17. As a result, the rotation-side housing 15 is rotated with respect to the fixed-side housing 13 in a state where the speed is reduced in three stages by the planetary gear reduction mechanisms 24, 25, and 26.

Here, the lubricant oil for lubricating each of the planetary gear reduction mechanisms 24, 25, and 26 and the bearing 19 and the like is filled in the rotation-side housing 15, and this lubricant oil L is sealed in the rotation-side housing 15 by the floating seal 27.

The floating seal 27 is provided closer to an inner side in the radial direction than the gap 22 formed between the fixed-side housing 13 and the rotation-side housing 15. The floating seal 27 seals the lubricant oil L in the rotation-side housing 15 and seals the gap 22 so as to suppress entry of the foreign substances such as muddy water, earth and sand into the rotation-side housing 15. As shown in Figs. 3 and 4, the floating seal 27 is constituted by including the fixed-side seal ring 28 which will be described later, the rotation-side seal ring 29, the fixed-side O-ring 30, and the rotation-side O-ring 31.

The fixed-side seal ring 28 is disposed on the inner peripheral side of the seal attaching part 13D provided on the fixed-side housing 13. The fixed-side seal ring 28 makes a pair with the rotation-side seal ring 29 and is formed cylindrically using a metal material excellent in abrasion resistance and corrosion resistance, for example. A large-diameter flange part 28A is provided on the fixed-side seal ring 28, and the annular sliding contact surface 28B is formed on the end surface of the large-diameter flange part 28A. Moreover, an outer peripheral surface 28C of the fixed-side seal ring 28 faced with an inner peripheral surface 13D1 of the seal attaching part 13D is a tapered surface in which a diameter is gradually enlarged toward the large-diameter flange part 28A. The fixed-side O-ring 30 which will be described later is provided between this outer peripheral surface 28C and the inner peripheral surface 13D1 of the seal attaching part 13D.

The rotation-side seal ring 29 is disposed on the inner peripheral side of the seal attaching part 15B provided on the flange part 15A of the rotation-side housing 15. The rotation-side seal ring 29 is formed of the same components as those of the fixed-side seal ring 28. Here, a large-diameter flange part 29A is provided on the rotation-side seal ring 29, and the annular sliding contact surface 29B is formed on the end surface of the large-diameter flange part 29A. Moreover, an outer peripheral surface 29C of the rotation-side seal ring 29 faced with an inner peripheral surface 15B1 of the seal attaching part 15B is a taper surface in which a diameter is gradually enlarged toward the large-diameter flange part 29A. The rotation-side O-ring 31 which will be described later is provided between this outer peripheral surface 29C and the inner peripheral surface 15B1 of the seal attaching part 15B.

The fixed-side O-ring 30 is provided between the inner peripheral surface 13D1 of the seal attaching part 13D provided on the fixed-side housing 13 and the outer peripheral surface 28C of the fixed-side seal ring 28. The fixed-side O-ring 30 makes a pair with the rotation-side O-ring 31 and is formed annularly by using a rubber material or the like having oil resistance and elasticity such as butadiene rubber, for example. The fixed-side O-ring 30 seals a space between the seal attaching part 13D of the fixed-side housing 13 and the fixed-side seal ring 28 and presses the fixed-side seal ring 28 in the axial direction toward the rotation-side seal ring 29 at all times.

The rotation-side O-ring 31 is provided between the inner peripheral surface 15B1 of the seal attaching part 15B provided on the flange part 15A of the rotation-side housing 15 and the outer peripheral surface 29C of the rotation-side seal ring 29. The rotation-side O-ring 31 is formed of the same components as those of the fixed-side O-ring 30 and seals a space between the seal attaching part 15B of the flange part 15A and the rotation-side seal ring 29 and presses the rotation-side seal ring 29 in the axial direction toward the fixed-side seal ring 28 at all times.

As a result, as shown in Fig. 4, the sliding contact surface 28B of the fixed-side seal ring 28 and the sliding contact surface 29B of the rotation-side seal ring 29 are properly brought into sliding contact by a pressing force in the axial direction given by the fixed-side O-ring 30 and the rotation-side O-ring 31. Therefore, when the rotation-side housing 15 is rotated with respect to the fixed-side housing 13, the sliding contact surface 28B of the fixed-side seal ring 28 is brought into liquid-tight sliding contact with the sliding contact surface 29B of the rotation-side seal ring 29 and can seal the lubricant oil L in the rotation-side housing 15.

The labyrinth 32 is provided in the gap 22 between the fixed-side end surface 13E of the fixed-side housing 13 and the rotation-side end surface 15C of the rotation-side housing 15 by being located closer to the outer side in the radial direction than the floating seal 27. That is, the labyrinth 32 suppresses entry of large earth and sand into the rotation-side housing 15 by forming a crank-shaped labyrinth on the outer peripheral side of the gap 22.

Specifically, as shown in Fig. 4, the labyrinth 32 is constituted by the fixed-side recessed part 13F as a first recessed part formed by denting the fixed-side end surface 13E in the axial direction, the rotation-side fitting projecting part 15D as a first fitting projecting part provided on the rotation-side end surface 15C by protruding in the axial direction and fitted with the fixed-side recessed part 13F, the rotation-side recessed part 15E as a second recessed part disposed closer to the outer side in the radial direction than the fixed-side recessed part 13F and formed by denting the rotation-side end surface 15C in the axial direction, and the fixed-side fitting projecting part 13G as a second fitting projecting part provided on the fixed-side end surface 13E by protruding in the axial direction and fitted with the rotation-side recessed part 15E. In this case, the fixed-side fitting projecting part 13G is faced with the rotation-side fitting projecting part 15D with a gap in the radial direction.

Subsequently, the first and second fabric-like members 33 and 34, the grease accommodating space 35, and the grease passage 36 and the like used in the first embodiment will be described.

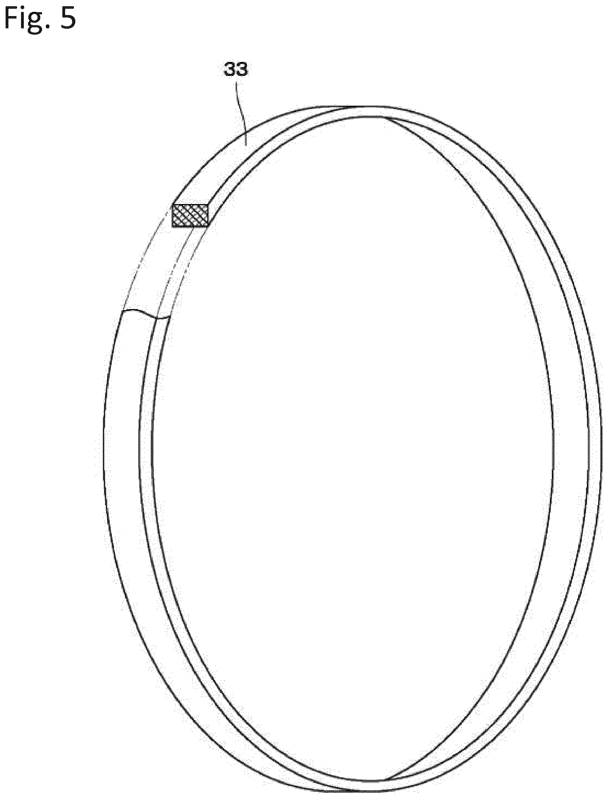

The first fabric-like member 33 is provided in the fixed-side recessed part 13F and is faced with the rotation-side fitting projecting part 15D in the axial direction. As shown in Fig. 5, the first fabric-like member 33 is formed annularly of a fabric-like material such as compressed and molded fibers, felt, unwoven cloth, woven cloth, knitted articles and the like so as to be fitted with the fixed-side recessed part 13F. This first fabric-like member 33 catches foreign substances such as muddy water, earth and sand or the like having entered into the labyrinth 32 from the outside.

An axial dimension (a thickness in the axial direction) of the first fabric-like member 33 is set larger than the axial dimension between a bottom surface (a deepest part surface) of the fixed-side recessed part 13F and a distal end surface of the rotation-side fitting projecting part 15D. As a result, when the rotation-side housing 15 is mounted on the fixed-side housing 13, the first fabric-like member 33 is pressed between the inner peripheral surface of the fixed-side recessed part 13F and the distal end surface of the rotation-side fitting projecting part 15D without a gap and is disposed in the fixed-side recessed part 13F.

The second fabric-like member 34 is provided in the rotation-side recessed part 15E and is faced with the fixed-side fitting projecting part 13G in the axial direction. The second fabric-like member 34 is formed annularly of a fabric-like material such as compressed and molded fibers, felt, unwoven cloth, woven cloth, knitted articles and the like so as to be fitted with the rotation-side recessed part 15E. This second fabric-like member 34 catches foreign substances such as muddy water, earth and sand or the like having entered into the labyrinth 32 from the outside. Here, since the first fabric-like member 33 catches the foreign substances such as earth and sand having passed through the second fabric-like member 34, it preferably has mesh finer than that of the second fabric-like member 34.

The second fabric-like member 34 is formed with a radial dimension somewhat larger than that of the first fabric-like member 33. Moreover, the axial dimension (the thickness in the axial direction) of the second fabric-like member 34 is set larger than the axial dimension between the bottom surface (the deepest part surface) of the rotation-side recessed part 15E and the distal end surface of the fixed-side fitting projecting part 13G. As a result, when the rotation-side housing 15 is mounted on the fixed-side housing 13, the second fabric-like member 34 is pressed between the inner peripheral surface of the rotation-side recessed part 15E and the distal end surface of the fixed-side fitting projecting part 13G without a gap and is disposed in the rotation-side recessed part 15E.

The grease accommodating space 35 is formed in the gap in the radial direction between the fixed-side fitting projecting part 13G and the rotation-side fitting projecting part 15D by being located between the first fabric-like member 33 and the second fabric-like member 34. That is, the grease accommodating space 35 is formed as a cylindrical space forming a square section surrounded by the inner peripheral surface of the fixed-side fitting projecting part 13G, the outer peripheral surface of the rotation-side fitting projecting part 15D, the first fabric-like member 33, and the second fabric-like member 34. A grease G is filled in this grease accommodating space 35 through the grease passage 36. This grease G catches the foreign substances such as muddy water, earth and sand or the like having entered into the labyrinth 32 from the outside. Moreover, the grease G is partially liquefied by a temperature rise during operation of the traveling device 9 and is, moreover, thermally expanded and thus, impregnates the first and second fabric-like members 33 and 34. As a result, the grease G is filled in fine gaps formed between the fibers of the first and second fabric-like members 33 and 34, and the first and second fabric-like members 33 and 34 are configured capable of catching the fine foreign substances.

The grease passage 36 is provided by diagonally drilling a space between the outer peripheral surface of the fixed-side housing 13 and the grease accommodating space 35 by being located on the outer peripheral side of the fixed-side housing 13. This grease passage 36 forms a passage for filing the grease G in the grease accommodating space 35. An opening end of the grease passage 36 opened in the outer peripheral surface of the fixed-side housing 13 is closed (sealed) by a sealing plug 37 for preventing a backflow of the grease G.

The traveling device 9 of the hydraulic excavator 1 in the first embodiment has the constitution as described above and subsequently, an operation of the hydraulic excavator 1 will be described.

When the hydraulic motor 11 is rotated during traveling of the hydraulic excavator 1, the speed of the rotation of this hydraulic motor 11 is reduced in three stages by the planetary gear reduction mechanisms 24, 25, and 26 of the reduction device 12 and is transmitted to the rotation-side housing 15. As a result, the rotation-side housing 15 is rotated with a large torque, the crawler belt 8 wound around the driving wheel 21 and the idler wheel 6 fixed to this rotation-side housing 15 is driven, and the hydraulic excavator 1 travels.

Here, the rotation-side seal ring 29 of the floating seal 27 is rotated integrally with the rotation-side housing 15. At this time, the rotation-side seal ring 29 seals a gap between the rotation-side housing 15 and the fixed-side housing 13 in a liquid tight manner by causing the sliding contact surface 29B in sliding contact with the sliding contact surface 28B of the fixed-side seal ring 28. As a result, the lubricant oil L is held in the rotation-side housing 15, and the bearing 19, the planetary gear reduction mechanisms 24, 25, and 26 and the like are properly lubricated by the lubricant oil L, and the rotation-side housing 15 can be rotated smoothly.

At this time, the labyrinth 32 is provided in the gap 22 between the fixed-side end surface 13E of the fixed-side housing 13 and the rotation-side end surface 15C of the rotation-side housing 15. Moreover, the first fabric-like member 33 is provided on the fixed-side recessed part 13F constituting the labyrinth 32, and the second fabric-like member 34 is provided on the rotation-side recessed part 15E. Furthermore, the grease G is filled in the grease accommodating space 35 between the first fabric-like member 33 and the second fabric-like member 34. As a result, when the hydraulic excavator 1 travels on a muddy land, even if foreign substances such as earth and sand enter the labyrinth 32, entry of the foreign substances such as earth and sand to the periphery of the floating seal 27 through the gap 22 can be suppressed by the first and second fabric-like members 33 and 34 and the grease G.

Specifically, even if the foreign substances such as earth and sand enter the labyrinth 32, entry of the foreign substances such as earth and sand to the periphery of the floating seal 27 can be suppressed by the second fabric-like member 34 located on the outer peripheral side of the labyrinth 32. Moreover, even if the foreign substances such as earth and sand pass through the second fabric-like member 34, entry of the foreign substances to the periphery of the floating seal 27 can be suppressed by catching them by the grease G filled in the grease accommodating space 35 and the first fabric-like member 33. In this case, a part of the grease G filled in the grease accommodating space 35 is liquefied by the temperature rise caused by friction with the rotation-side fitting projecting part 15D during the operation of the traveling device 9 and thermally expanded. As a result, a part of the liquefied grease G is filled in the gap between the fibers of the first and second fabric-like members 33 and 34 and thus, the fine foreign substances can be caught by the first and second fabric-like members 33 and 34.

As a result, accumulation of the foreign substances such as earth and sand in the periphery of the floating seal 27 can be suppressed, and acting of the pressure on the fixed-side O-ring 30 and the rotation-side O-ring 31 of the floating seal 27 can be suppressed. Therefore, the sliding contact surface 28B of the fixed-side seal ring 28 and the sliding contact surface 29B of the rotation-side seal ring 29 can be properly brought into sliding contact with a uniform surface pressure over the entire circumference by the elastic force of each of the O-rings 30 and 31. As a result, sealing performances of the floating seal 27 can be ensured.

As a result, leakage of the lubricant oil L filled in the rotation-side housing 15 to the outside can be suppressed, and the bearing 19 and the planetary gear reduction mechanisms 24, 25, and 26 and the like can be properly lubricated by this lubricant oil L. Therefore, the rotation-side housing 15 can be smoothly rotated for a long time, and reliability of the entire reduction device 12 can be improved.

Then, according to the first embodiment, the labyrinth 32 provided in the gap 22 between the fixed-side housing 13 and the rotation-side housing 15 is constituted by the fixed-side recessed part 13F and the fixed-side fitting projecting part 13G of the fixed-side housing 13, the rotation-side fitting projecting part 15D and the rotation-side recessed part 15E of the rotation-side housing 15. In this case, the first fabric-like member 33 formed annularly by the fabric-like material is provided in the fixed-side recessed part 13F, and the second fabric-like member 34 formed annularly by the fabric-like material is provided in the rotation-side recessed part 15E. Moreover, the grease accommodating space 35 is formed between the first fabric-like member 33 and the second fabric-like member 34, and the grease G is filled in the grease accommodating space 35.

As a result, even if the foreign substances such as earth and sand enter the labyrinth 32, entry of the foreign substances such as earth and sand to the periphery of the floating seal 27 through the gap 22 can be suppressed by the first and second fabric-like members 33 and 34 and the grease G. In this case, since the grease G is filled in the grease accommodating space 35 formed between the first fabric-like member 33 and the second fabric-like member 34, foreign substances with a small grain size having passed through the second fabric-like member 34 can be caught by the grease G. Moreover, the foreign substances having passed through the second fabric-like member 34 and the grease G can be caught by the first fabric-like member 33 having a mesh finer than that of the second fabric-like member 34. As a result, entry of the foreign substance such as earth and sand into the floating seal 27 through the gap 22 formed between the fixed-side housing 13 and the rotation-side housing 15 can be suppressed, and the sealing performances of the floating seal 27 can be held properly for a long time.

Moreover, the first and second fabric-like members 33 and 34 are formed of a fabric-like material such as compressed and molded fibers, felt, unwoven cloth, woven cloth, knitted articles and the like. As a result, as compared with a case where a resin or a material made of metal is used, for example, abrasion of the first and second fabric-like members 33 and 34 can be suppressed. As a result, since the sealing performances of the labyrinth 32 can be held for a long time, a replacement cost of components can be suppressed.

Moreover, the labyrinth 32 is formed by the fixed-side recessed part 13F and the fixed-side fitting projecting part 13G of the fixed-side housing 13 and the rotation-side fitting projecting part 15D and the rotation-side recessed part 15E of the rotation-side housing 15 as a crank-shaped labyrinth. As a result, entry of the foreign substances such as earth and sand into the rotation-side housing 15 through the labyrinth 32 can be suppressed.

Moreover, since the temperature of the grease G rises and the grease G is liquefied during traveling of the hydraulic excavator 1 and moreover, it is thermally expanded, the grease G can be filled in the gap between the fibers of the first and second fabric-like members 33 and 34. As a result, even fine foreign substances can be caught by the first and second fabric-like members 33 and 34.

Moreover, the grease passage 36 for filling the grease G in the grease accommodating space 35 is provided in the fixed-side housing 13. As a result, the grease G can be filled in the grease accommodating space 35 easily through the grease passage 36.

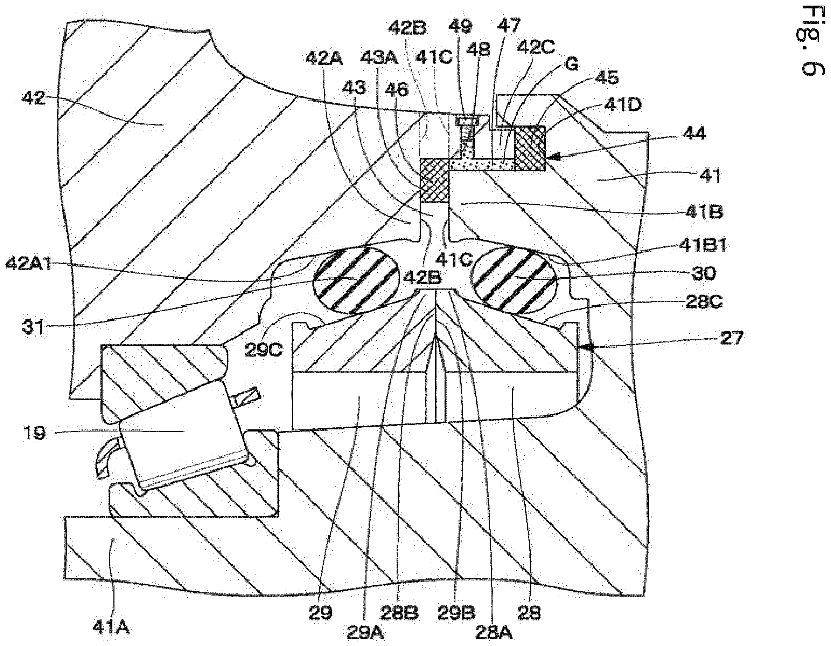

Subsequently, Fig. 6 shows a second embodiment of the present invention. A feature of the second embodiment is that one recessed part is provided in the fixed-side housing, one fitting projecting part is provided on the rotation-side housing, a first fabric-like member is provided in the recessed part, and a second fabric-like member is provided between an axial end surface of the fixed-side housing and an axial end surface of the rotation-side housing. It should be noted that in the second embodiment, components identical to those in the aforementioned first embodiment are referred to as identical reference numerals and the explanation is omitted.

A fixed-side housing 41 used in the second embodiment has a flange part (not shown), a housing support part 41A, a male spline part (not shown), a seal attaching part 41B, an inner peripheral surface 41B1, a fixed-side end surface 41C, and a fixed-side recessed part 41D similarly to the fixed-side housing 13 according to the first embodiment. Here, the fixed-side end surface 41C constitutes the axial end surface of the fixed-side housing 41 and forms a gap 43 with a rotation-side end surface 42B of a rotation-side housing 42 which will be described later. As indicated by a solid line and a two-dot chain line in Fig. 6, the fixed-side end surface 41C as an axial end surface is a surface biased to the fixed-side O-ring 30 side with respect to a plane on which the sliding contact surface 28B of the fixed-side seal ring 28 is disposed. An annular fixed-side recessed part 41D constituting a labyrinth 44 which will be described later is formed on the outer peripheral side of the fixed-side end surface 41C.

The rotation-side housing 42 has a flange part (not shown), a seal attaching part 42A, an inner peripheral surface 42A1, a rotation-side end surface 42B, and a rotation-side fitting projecting part 42C similarly to the rotation-side housing 15 according to the first embodiment. Here, the rotation-side end surface 42B constitutes an axial end surface of the rotation-side housing 42 and forms the gap 43 with the fixed-side end surface 41C of the fixed-side housing 41. As indicated by the solid line and the two-dot chain line in Fig. 6, the rotation-side end surface 42B as the axial end surface is a surface biased to the rotation-side O-ring 31 side with respect to the plane on which the sliding contact surface 29B of the rotation-side seal ring 29 is disposed. The annular rotation-side fitting projecting part 42C constituting the labyrinth 44 is formed on the outer peripheral side of the rotation-side end surface 42B.

The axial gap 43 is formed annularly over the entire circumference between the fixed-side end surface 41C of the fixed-side housing 41 and the rotation-side end surface 42B of the rotation-side housing 42. That is, the gap 43 is formed between the fixed-side end surface 41C and the rotation-side end surface 42B including a gap between the fixed-side recessed part 41D and the rotation-side fitting projecting part 42C.

Here, an annular space part 43A is provided between the fixed-side end surface 41C and the rotation-side end surface 42B by being located closer to an inner side in the radial direction than the rotation-side fitting projecting part 42C. This annular space part 43A is made of an annular space formed on the inner peripheral side of the rotation-side fitting projecting part 42C and in which a second fabric-like member 46 which will be described later is disposed.

The labyrinth 44 is provided in the gap 43 between the fixed-side housing 41 and the rotation-side housing 42 by being located closer to the outer side in the radial direction than the floating seal 27. Specifically, the labyrinth 44 is constituted by the annular fixed-side recessed part 41D formed by denting the fixed-side end surface 41C in the axial direction and the cylindrical rotation-side fitting projecting part 42C formed on the rotation-side end surface 42B protruding in the axial direction and fitted with the fixed-side recessed part 41D.

Subsequently, first and second fabric-like members 45 and 46, the grease accommodating space 47, the grease passage 48 and the like used in the second embodiment will be described.

The first fabric-like member 45 is formed similarly to the first fabric-like member 33 according to the first embodiment and is provided by facing the rotation-side fitting projecting part 42C in the axial direction in the fixed-side recessed part 41D. The first fabric-like member 45 is formed annularly of a fabric-like material such as compressed and molded fibers, felt, unwoven cloth, woven cloth, knitted articles and the like so as to be fitted with the fixed-side recessed part 41D. This first fabric-like member 45 catches foreign substances such as muddy water, earth and sand or the like having entered into the labyrinth 44 from the outside.

The second fabric-like member 46 is formed similarly to the second fabric-like member 34 in the first embodiment and is provided in the annular space part 43A formed between the fixed-side end surface 41C and the rotation-side end surface 42B. The second fabric-like member 46 is formed annularly of a fabric-like material such as compressed and molded fibers, felt, unwoven cloth, woven cloth, knitted articles and the like so as to be fitted with the inner peripheral surface of the rotation-side fitting projecting part 42C. This second fabric-like member 46 catches foreign substances such as muddy water, earth and sand or the like having entered into the labyrinth 44 from the outside. Since the second fabric-like member 46 catches the foreign substances such as earth and sand having passed through the first fabric-like member 45, it preferably has mesh finer than that of the first fabric-like member 45.

The grease accommodating space 47 is formed in a gap in the radial direction between the outer peripheral surface of the seal attaching part 41B of the fixed-side housing 41 and the rotation-side fitting projecting part 42C by being located between the first fabric-like member 45 and the second fabric-like member 46. That is, the grease accommodating space 47 is formed as a cylindrical space forming a square section surrounded by the outer peripheral surface of the seal attaching part 41B, the inner peripheral surface of the rotation-side fitting projecting part 42C, the first fabric-like member 45, and the second fabric-like member 46. The grease G is filled in this grease accommodating space 47 through the grease passage 48 and the grease G catches the foreign substances such as muddy water, earth and sand or the like having entered into the labyrinth 44 from the outside.

The grease passage 48 is provided by drilling a space between the outer peripheral surface of the rotation-side housing 42 and the grease accommodating space 47 by being located on the outer peripheral side of the rotation-side housing 42. This grease passage 48 forms a passage for filing the grease G in the grease accommodating space 47. An opening end of the grease passage 48 opened in the outer peripheral surface of the rotation-side housing 42 is closed (sealed) by a sealing plug 49 for preventing a backflow of the grease G.

The traveling device according to the second embodiment has the constitution as described above and its basic actions are not particularly different from that according to the first embodiment.

That is, according to the second embodiment, the labyrinth 44 is constituted by the fixed-side recessed part 41D provided on the fixed-side housing 41 and the rotation-side fitting projecting part 42C provided on the rotation-side housing 42. Moreover, the first fabric-like member 45 is provided on the fixed-side recessed part 41D, the second fabric-like member 46 is provided in the annular space part 43A formed between the fixed-side end surface 41C and the rotation-side end surface 42B, and the grease G is filled in the grease accommodating space 47 formed between the first and second fabric-like members 45 and 46.

As a result, even if the foreign substances such as earth and sand enter the labyrinth 44, entry of the foreign substances such as earth and sand to the periphery of the floating seal 27 through the gap 43 can be suppressed by the first and second fabric-like members 45 and 46 and the grease G. As a result, the sealing performances of the floating seal 27 can be held properly for a long time.

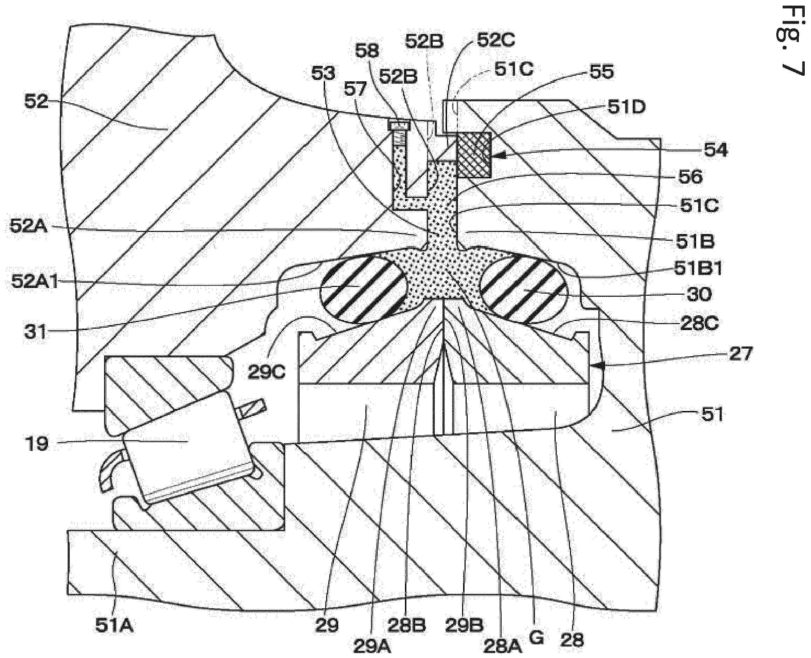

Subsequently, Fig. 7 shows a third embodiment of the present invention. A feature of the third embodiment is that one recessed part is provided in the fixed-side housing, one fitting projecting part is provided on the rotation-side housing, one fabric-like member is provided in the recessed part, and a grease accommodating space is provided between the fabric-like member and the floating seal. It should be noted that in the third embodiment, components identical to those in the aforementioned first embodiment are referred to as identical reference numerals and the explanation is omitted.

A fixed-side housing 51 used in the third embodiment has a flange part (not shown), a housing support part 51A, a male spline part (not shown), a seal attaching part 51B, an inner peripheral surface 51B1, a fixed-side end surface 51C, and a fixed-side recessed part 51D similarly to the fixed-side housing 13 according to the first embodiment. Here, the fixed-side end surface 51C constitutes the axial end surface of the fixed-side housing 51 and forms a gap 53 with a rotation-side end surface 52B of a rotation-side housing 52 which will be described later. As indicated by a solid line and a two-dot chain line in Fig. 7, the fixed-side end surface 51C as an axial end surface is a surface biased to the fixed-side O-ring 30 side with respect to a plane on which the sliding contact surface 28B of the fixed-side seal ring 28 is disposed. An annular fixed-side recessed part 51D constituting a labyrinth 54 which will be described later is formed on the outer peripheral side of the fixed-side end surface 51C.

The rotation-side housing 52 has a flange part (not shown), a seal attaching part 52A, an inner peripheral surface 52A1, a rotation-side end surface 52B, and a rotation-side fitting projecting part 52C similarly to the rotation-side housing 15 according to the first embodiment. Here, the rotation-side end surface 52B constitutes an axial end surface of the rotation-side housing 52 and forms the gap 53 with the fixed-side end surface 51C of the fixed-side housing 51. As indicated by the solid line and the two-dot chain line in Fig. 7, the rotation-side end surface 52B as the axial end surface is a surface biased to the rotation-side O-ring 31 side with respect to the plane on which the sliding contact surface 29B of the rotation-side seal ring 29 is disposed. The annular rotation-side fitting projecting part 52C constituting the labyrinth 54 is formed on the outer peripheral side of the rotation-side end surface 52B.

The axial gap 53 is formed annularly over the entire circumference between the fixed-side end surface 51C of the fixed-side housing 51 and the rotation-side end surface 52B of the rotation-side housing 52. That is, the gap 53 is formed between the fixed-side end surface 51C and the rotation-side end surface 52B including a gap between the fixed-side recessed part 51D and the rotation-side fitting projecting part 52C.

The labyrinth 54 is provided in the gap 53 between the fixed-side housing 51 and the rotation-side housing 52 by being located closer to the outer side in the radial direction than the floating seal 27. Specifically, the labyrinth 54 is constituted by the annular fixed-side recessed part 51D formed by denting the fixed-side end surface 51C in the axial direction and the cylindrical rotation-side fitting projecting part 52C formed on the rotation-side end surface 52B by protruding in the axial direction and fitted with the fixed-side recessed part 51D.

Subsequently, a fabric-like member 55, a grease accommodating space 56, a grease passage 57 and the like used in the third embodiment will be described.

The fabric-like member 55 is formed similarly to the first fabric-like member 33 in the first embodiment and is provided in the fixed-side recessed part 51D by facing the rotation-side fitting projecting part 52C in the axial direction. The fabric-like member 55 is formed annularly of a fabric-like material such as compressed and molded fibers, felt, unwoven cloth, woven cloth, knitted articles and the like so as to be fitted with the fixed-side recessed part 51D. This fabric-like member 55 catches foreign substances such as muddy water, earth and sand or the like having entered into the labyrinth 54 from the outside.

The grease accommodating space 56 is formed in the gap 53 located between the fabric-like member 55 and the floating seal 27. That is, the grease accommodating space 56 is formed as a space surrounded by the outer peripheral surface 28C of the fixed-side seal ring 28, the outer peripheral surface 29C of the rotation-side seal ring 29, the fixed-side O-ring 30, the rotation-side O-ring 31, the fixed-side end surface 51C, the rotation-side end surface 52B, the inner peripheral surface of the rotation-side fitting projecting part 52C, and the fabric-like member 55. That is, the grease accommodating space 56 is formed as a cylindrical space having the inverted T-shaped sectional shape. The grease G is filled in this grease accommodating space 56 through the grease passage 57.

The grease passage 57 is provided by drilling a space between the outer peripheral surface of the rotation-side housing 52 and the grease accommodating space 56 by being located on the outer peripheral side of the rotation-side housing 52. This grease passage 57 is formed having an L-shape by a radial passage extending in the radial direction from the outer peripheral surface of the seal attaching part 52A and an axial passage extending in the axial direction from the distal end of this radial passage and opened in the grease accommodating space 56. The grease passage 57 forms a passage for filing the grease G in the grease accommodating space 56. An opening end of the grease passage 57 opened in the outer peripheral surface of the seal attaching part 52A is closed (sealed) by a sealing plug 58 for preventing a backflow of the grease G.

The traveling device according to the third embodiment has the constitution as described above and its basic actions are not particularly different from that according to the first embodiment.

That is, according to the third embodiment, the labyrinth 54 is constituted by the fixed-side recessed part 51D provided on the fixed-side housing 51 and the rotation-side fitting projecting part 52C provided on the rotation-side housing 52. Moreover, the fabric-like member 55 is provided on the fixed-side recessed part 51D, and the grease G is filled in the grease accommodating space 56 formed between the fabric-like member 55 and the floating seal 27. As a result, even if the foreign substances such as earth and sand enter the labyrinth 54, entry of the foreign substances such as earth and sand to the periphery of the floating seal 27 through the gap 53 can be suppressed by the fabric-like member 55 and the grease G. As a result, the sealing performances of the floating seal 27 can be held properly for a long time.

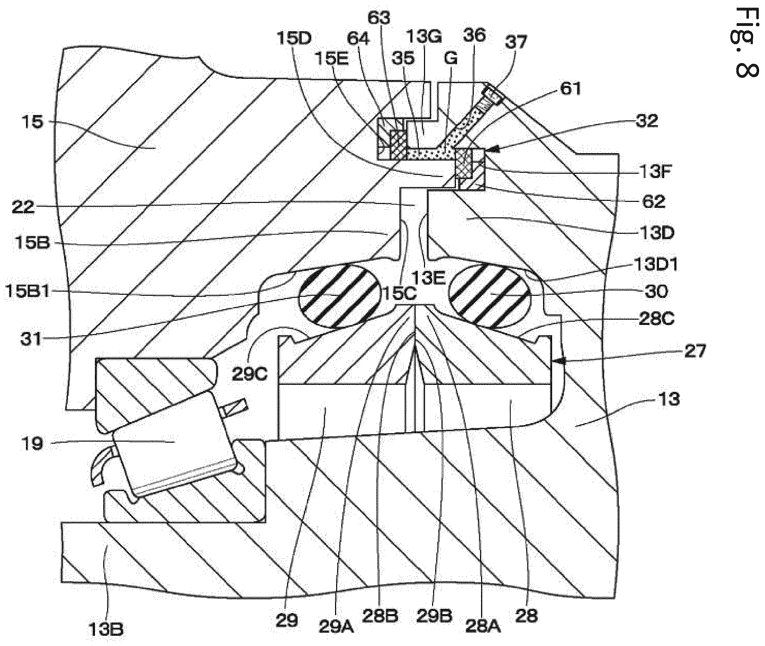

Subsequently, Fig. 8 shows a fourth embodiment of the present invention. A feature of the fourth embodiment is that an annular frame body is fixed to the first and second fabric-like members. It should be noted that in the fourth embodiment, components identical to those in the aforementioned first embodiment are referred to as identical reference numerals and the explanation is omitted.

A first fabric-like member 61 used in the fourth embodiment is formed by using a fabric-like material similar to the first fabric-like member 33 according to the first embodiment and is disposed in the fixed-side recessed part 13F by facing the rotation-side fitting projecting part 15D in the axial direction. Therefore, the first fabric-like member 61 is formed annularly so as to be fitted with the fixed-side recessed part 13F. A first annular frame body 62 is provided on an inner peripheral side of the first fabric-like member 61.

The first annular frame body 62 is mounted by being fitted with the fixed-side recessed part 13F in a state of holding the inner peripheral side of the first fabric-like member 61. This first annular frame body 62 is formed as a cylindrical body having an L-shaped section by using a steel material, for example, and the inner peripheral side of the first fabric-like member 61 is fixed to an outer peripheral surface thereof by using a double-sided tape, an adhesive or the like.

A second fabric-like member 63 is formed by using a fabric-like material similar to that of the second fabric-like member 34 according to the first embodiment and is provided in the rotation-side recessed part 15E by facing the fixed-side fitting projecting part 13G in the axial direction. The second fabric-like member 63 is formed annularly so as to be fitted with the rotation-side recessed part 15E. A second annular frame body 64 is provided on the outer peripheral side of the second fabric-like member 63.

The second annular frame body 64 is mounted by being fitted with the rotation-side recessed part 15E in a state of holding the outer peripheral side of the second fabric-like member 63. This second annular frame body 64 is formed as a cylindrical body having an L-shaped section by using a steel material, for example, and the outer peripheral side of the second fabric-like member 63 is fixed to an inner peripheral surface thereof by using a double-sided tape, an adhesive or the like similarly to the first annular frame body 62.

The traveling device according to the fourth embodiment has the constitution as described above and its basic actions are not particularly different from that according to the first embodiment.

Thus, according to the fourth embodiment, the inner peripheral side of the first fabric-like member 61 can be held by the first annular frame body 62, and the outer peripheral side of the second fabric-like member 63 can be held by the second annular frame body 64. Thus, the first fabric-like member 61 can be easily disposed on the fixed-side recessed part 13F by fitting the first annular frame body 62 with the fixed-side recessed part 13F. Moreover, the second fabric-like member 63 can be easily disposed in the rotation-side recessed part 15E by fitting the second annular frame body 64 with the rotation-side recessed part 15E. As a result, mounting performances of the first and second fabric-like members 61 and 63 can be improved.

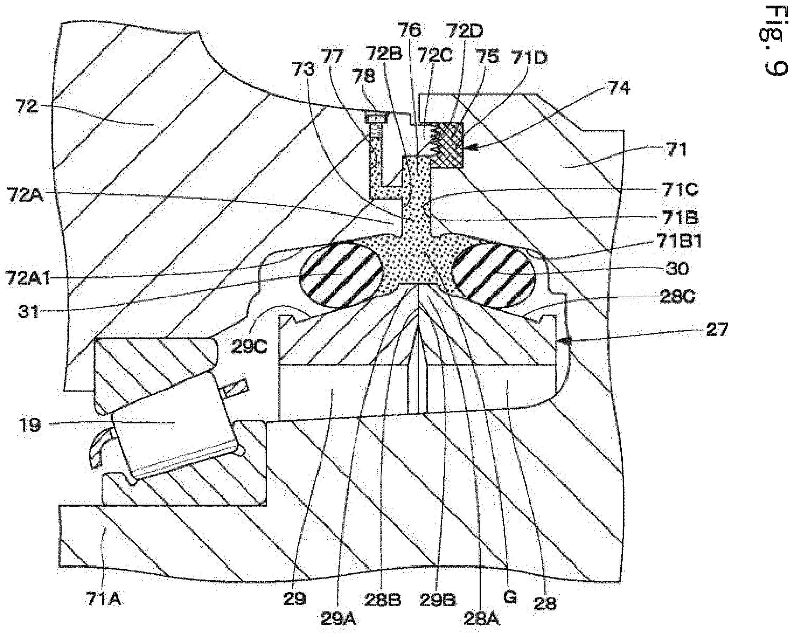

Subsequently, Fig. 9 shows a fifth embodiment of the present invention. A feature of the fifth embodiment is that a recessed/projected part is formed at a distal end of a fitting projecting part. It should be noted that in the fifth embodiment, components identical to those in the aforementioned first embodiment are referred to as identical reference numerals and the explanation is omitted.

A fixed-side housing 71 used in the fifth embodiment has a flange part (not shown), a housing support part 71A, a male spline part (not shown), a seal attaching part 71B, an inner peripheral surface 71B1, a fixed-side end surface 71C, and a fixed-side recessed part 71D similarly to the fixed-side housing 13 according to the first embodiment. Here, the fixed-side end surface 71C constitutes an axial end surface of the fixed-side housing 71, and the annular fixed-side recessed part 71D is formed on the outer peripheral side of the fixed-side end surface 71C.

The rotation-side housing 72 has a flange part (not shown), a seal attaching part 72A, an inner peripheral surface 72A1, a rotation-side end surface 72B, a rotation-side fitting projecting part 72C, and a recessed/projected part which will be described later similarly to the rotation-side housing 15 according to the first embodiment. Here, the rotation-side end surface 72B constitutes an axial end surface of the rotation-side housing 72, and a gap 73 in the axial direction is formed annularly over the entire circumference between the rotation-side end surface 72B and the fixed-side end surface 71C. The annular rotation-side fitting projecting part 72C to be fitted with the fixed-side recessed part 71D is formed on the outer peripheral side of the rotation-side end surface 72B, and a labyrinth 74 is constituted by the rotation-side fitting projecting part 72C and the fixed-side recessed part 71D.

The fabric-like member 75 is provided in the fixed-side recessed part 71D by facing the rotation-side fitting projecting part 72C in the axial direction. The fabric-like member 75 is formed annularly by using the fabric-like material similar to the first fabric-like member 33 according to the first embodiment. A grease accommodating space 76 is provided between the fabric-like member 75 and the floating seal 27, and the grease G is filled in this grease accommodating space 76 through a grease passage 77 formed having an L-shape. The grease passage 77 is closed by a sealing plug 78.

The recessed/projected part is provided by being located at a distal end of the rotation-side fitting projecting part 72C. The recessed/projected part is formed by cutting away a distal end surface of the rotation-side fitting projecting part 72C into a mountain shape (V-shape, triangular shape) and is in contact with a surface of the fabric-like member 75. An axial dimension of the recessed/projected part is set to a dimension of such a degree that the recessed/projected part is not separated from the fabric-like member 75 even if an axial interval between the fixed-side end surface 71C and the rotation-side end surface 72B is changed to a wavy form due to misalignment of the rotation-side housing 72 with respect to the fixed-side housing 71 or the like.

The traveling device according to the fifth embodiment has the constitution as described above and its basic actions are not particularly different from that according to the first embodiment.

Thus, according to the fifth embodiment, the recessed/projected part 72D in contact with (biting into) the surface of the fabric-like member 75 is formed at the distal end of the rotation-side fitting projecting part 72C. As a result, separation of the distal end of the rotation-side fitting projecting part 72C from the fabric-like member 75 can be suppressed even if the axial interval between the fixed-side end surface 71C and the rotation-side end surface 72B is changed to a wavy form due to misalignment of the rotation-side housing 72 with respect to the fixed-side housing 71. As a result, the sealing performances between the fabric-like member 75 and the rotation-side fitting projecting part 72C can be improved, and entry of the foreign substances such as earth and sand to the periphery of the floating seal 27 can be suppressed.

In the aforementioned first embodiment, it is configured such that the fixed-side recessed part 13F as the first recessed part and the fixed-side fitting projecting part 13G as the second fitting projecting part are provided on the fixed-side housing 13, and the rotation-side fitting projecting part 15D as the first fitting projecting part and the rotation-side recessed part 15E as the second recessed part are provided on the rotation-side housing 15. However, the present invention is not limited thereto and may be configured such that the first recessed part and the second fitting projecting part are provided on the rotation-side housing and the first fitting projecting part and the second recessed part are provided on the fixed-side housing. That is, to the contrary to the description in the first embodiment, it may be so configured that the fitting projecting part is provided on the housing in which the recessed part is provided, and the recessed part is provided in the housing on which the fitting projecting part is provided. This also applies to the second, third, fourth, and fifth embodiments.

Moreover, in the fourth embodiment, the case where the first annular frame body 62 is fixed to the inner peripheral side of the first fabric-like member 61, and the second annular frame body 64 is fixed to the outer peripheral side of the second fabric-like member 63 is exemplified. However, the present invention is not limited thereto and may be configured such that the annular frame body is fixed to the first and second fabric-like members 33 and 34 used in the first embodiment, the first and second fabric-like members 45 and 46 used in the second embodiment, the fabric-like member 55 used in the third embodiment, and the fabric-like member 75 used in the fifth embodiment, respectively.

Moreover, in the fifth embodiment, the case where the recessed/projected part biting into the fabric-like member 75 is provided at the distal end of the rotation-side fitting projecting part 72C is exemplified. However, the present invention is not limited thereto and may be configured such that the recessed/projected part is provided at the distal ends of the fixed-side fitting projecting part 13G and the rotation-side fitting projecting part 15D used in the first embodiment, the distal end of the rotation-side fitting projecting part 42C used in the second embodiment, and the distal ends of the fixed-side fitting projecting part 13G and the rotation-side fitting projecting part 15D used in the fourth embodiment, respectively.

Moreover, in the first embodiment, the grease passage 36 is configured to be provided on the outer peripheral side of the fixed-side housing 13. However, the present invention is not limited thereto and may be configured such that the grease passage is provided in the rotation-side housing. The same applies to the second, third, fourth, and fifth embodiments, and the grease passage may be configured to be provided on a housing opposite to the housing described in each of the embodiments.

Furthermore, it is needless to say that each of the aforementioned embodiments is exemplification and partial replacement or combination of constitutions shown in different embodiments is possible.

### DESCRIPTION OF REFERENCE NUMERALS

1: Hydraulic excavator (Construction machine)
2: Lower traveling structure (Vehicle body)
3: Upper revolving structure (Vehicle body)
9: Traveling device
11: Hydraulic motor (rotation source)
13, 41, 51, 71: Fixed-side housing
13E, 41C, 51C, 71C: Fixed-side end surface (axial end surface)
13F: Fixed-side recessed part (first recessed part)
13G: Fixed-side fitting projecting part (second fitting projecting part)
15, 42, 52, 72: Rotation-side housing
15C, 42B, 52B, 72B: Rotation-side end surface (axial end surface)
15D: Rotation-side fitting projecting part (first fitting projecting part)
15E: Rotation-side recessed part (second recessed part)
19: Bearing
22, 43, 53, 73: Gap
27: Floating seal
32, 44, 54, 74: Labyrinth
33, 45, 61: First fabric-like member
34, 46, 63: Second fabric-like member
35, 47, 56, 76: Grease accommodating space
36, 48, 57, 77: grease passage
41D, 51D, 71D: Fixed-side recessed part (recessed part)
42C, 52C, 72C: Rotation-side fitting projecting part (fitting projecting part)
43A: Annular space part
55, 75: fabric-like member
62: First annular frame body (annular frame body)
64: Second annular frame body (annular frame body)
72D: Recessed/projected part

## Claims

1. A traveling device for a construction machine, comprising:
a cylindrical fixed-side housing fixed to a vehicle body of the construction machine and in which a rotation source is accommodated;
a cylindrical rotation-side housing provided coaxially with respect to the fixed-side housing and rotatably through a bearing and driven by the rotation source for causing the vehicle body to travel;
a floating seal provided between the fixed-side housing and the rotation-side housing in order to seal a gap formed between an axial end surface of the fixed-side housing and an axial end surface of the rotation-side housing; and
a labyrinth provided in the gap by being located closer to an outer side in a radial direction than the floating seal, **characterized in that**:
the labyrinth is constituted by:
a first recessed part formed by denting one axial end surface in the axial end surfaces of the fixed-side housing and the rotation-side housing in the axial direction;
a first fitting projecting part provided by causing the other axial end surface in the axial end surfaces of the fixed-side housing and the rotation-side housing to protrude in the axial direction and to be fitted with the first recessed part;
a second recessed part formed by denting the other axial end surface in the axial end surfaces of the fixed-side housing and the rotation-side housing in the axial direction to be located closer to the outer side in the radial direction than the first recessed part; and
a second fitting projecting part provided by causing the one axial end surface in the axial end surfaces of the fixed-side housing and the rotation-side housing to protrude in the axial direction to be located closer to the outer side in the radial direction than the first recessed part and to be fitted with the second recessed part, wherein
a first fabric-like member formed annularly by a fabric-like material is provided in the first recessed part;
a second fabric-like member formed annularly by the fabric-like material is provided in the second recessed part;
a grease accommodating space is formed between the first fabric-like member and the second fabric-like member; and
grease is filled in the grease accommodating space.

2. The traveling device for the construction machine according to claim 1, wherein
an annular frame body made of a steel material is fixed to the first and second fabric-like members, respectively;
the annular frame body fixed to the first fabric-like member is mounted by fitting with the first recessed part; and
the annular frame body fixed to the second fabric-like member is mounted by fitting with the second recessed part.

3. The traveling device for the construction machine according to claim 1, wherein
a recessed/projected part in contact with surfaces of the first and second fabric-like members is formed, respectively, at distal ends of the first and second fitting projecting parts.

4. A traveling device for a construction machine, comprising:
a cylindrical fixed-side housing fixed to a vehicle body of the construction machine and in which a rotation source is accommodated;
a rotation-side housing provided coaxially with respect to the fixed-side housing and rotatably through a bearing and driven by the rotation source for causing the vehicle body to travel;
a floating seal provided between the fixed-side housing and the rotation-side housing in order to seal a gap formed between an axial end surface of the fixed-side housing and an axial end surface of the rotation-side housing; and
a labyrinth provided in the gap by being located closer to an outer side in a radial direction than the floating seal, **characterized in that**:
the labyrinth is constituted by:
a recessed part formed by denting one axial end surface in the axial end surfaces of the fixed-side housing and the rotation-side housing in the axial direction;
a fitting projecting part provided by protruding the other axial end surface in the axial end surfaces of the fixed-side housing and the rotation-side housing in the axial direction and to be fitted with the first recessed part;
a first fabric-like member formed annularly by a fabric-like material is provided in the recessed part;
an annular space part located closer to an inner side in the radial direction than the fitting projecting part and formed of an annular space is provided between the axial end surface of the fixed-side housing and the axial end surface of the rotation-side housing;
a second fabric-like member formed annularly by the fabric-like material is provided in the annular space part;
a grease accommodating space is formed between the first fabric-like member and the second fabric-like member; and
grease is filled in the grease accommodating space.

5. The traveling device for the construction machine according to claim 4, wherein
an annular frame body made of a steel material is fixed to the first and second fabric-like members, respectively;
the annular frame body fixed to the first fabric-like member is mounted by fitting with the recessed part; and
the annular frame body fixed to the second fabric-like member is mounted by fitting with an inner peripheral surface of the fitting projecting part.

6. The traveling device for the construction machine according to claim 4, wherein
a recessed/projected part in contact with a surface of the first fabric-like members is formed at a distal end of the fitting projecting part, and a recessed/projected part in contact with a surface of the second fabric-like members is formed on the one axial end surface in the axial end surfaces of the fixed-side housing and the rotation-side housing.

7. A traveling device for a construction machine, comprising:
a cylindrical fixed-side housing fixed to a vehicle body of the construction machine and in which a rotation source is accommodated;
a rotation-side housing provided coaxially with the fixed-side housing and rotatably through a bearing and driven by the rotation source for causing the vehicle body to travel;
a floating seal provided between the fixed-side housing and the rotation-side housing in order to seal a gap formed between an axial end surface of the fixed-side housing and an axial end surface of the rotation-side housing; and
a labyrinth provided in the gap by being located closer to an outer side in a radial direction than the floating seal, **characterized in that**:
the labyrinth is constituted by:
a recessed part formed by denting one axial end surface in the axial end surfaces of the fixed-side housing and the rotation-side housing in the axial direction; and
a fitting projecting part provided by protruding the other axial end surface in the axial end surfaces of the fixed-side housing and the rotation-side housing in the axial direction and to be fitted with the recessed part;
a fabric-like member formed annularly by a fabric-like material is provided in the recessed part;
a grease accommodating space is formed between the fabric-like member and the floating seal; and
grease is filled in the grease accommodating space.

8. The traveling device for the construction machine according to claim 7, wherein
an annular frame body made of a steel material is fixed to the fabric-like members; and
the annular frame body is mounted by fitting with the recessed part.

9. The traveling device for the construction machine according to claim 7, wherein
a recessed/projected part in contact with a surface of the fabric-like members is formed at a distal end of the fitting projecting parts.

10. The traveling device for the construction machine according to claims 1, 4 or 7, wherein
a grease passage for filling the grease in the grease accommodating space is provided in at least one of the fixed-side housing and the rotation-side housing.
